(19) Europäisches Patentamt
European Patent Office
Office européen des brevets

(11) **EP 4 634 828 B1**

(12) **EUROPEAN PATENT SPECIFICATION**

(45) Date of publication and mention
of the grant of the patent:
**15.07.2026 Bulletin 2026/29**

(21) Application number: **23836716.3**

(22) Date of filing: **12.12.2023**

(51) International Patent Classification (IPC):
*G06N 3/0464* (2023.01)

(52) Cooperative Patent Classification (CPC):
**G06N 3/0464; G06V 10/82**

(86) International application number:
**PCT/EP2023/085449**

(87) International publication number:
**WO 2024/126531 (20.06.2024 Gazette 2024/25)**

(54) **A METHOD FOR EVALUATING TRUST OF CONVOLUTIONAL NEURAL NETWORK OUTPUTS**

VERFAHREN ZUR BEURTEILUNG DES VERTRAUENS VON NEURALEN
FALTUNGSNETZWERKAUSGÄNGEN

PROCÉDÉ D'ÉVALUATION DE CONFIANCE DE SORTIES DE RÉSEAU NEURONAL CONVOLUTIF

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.12.2022 EP 22212961**

(43) Date of publication of application:
**22.10.2025 Bulletin 2025/43**

(73) Proprietor: **Valitacell Limited
Blackrock, Co. Dublin (IE)**

(72) Inventor: **THOMPSON, Ben
Dublin (IE)**

(74) Representative: **Maiwald GmbH
Elisenhof
Elisenstraße 3
80335 München (DE)**

(56) References cited:
**WO-A1-2022/045915      WO-A1-2022/108912**

• CHUNJONG PARK ET AL: "Reliable and
Trustworthy Machine Learning for Health Using
Dataset Shift Detection", ARXIV.ORG, CORNELL
UNIVERSITY LIBRARY, 201 OLIN LIBRARY
CORNELL UNIVERSITY ITHACA, NY 14853, 26
October 2021 (2021-10-26), XP091082107
• CHANDRAMOULI SHAMA SASTRY ET AL:
"Detecting Out-of-Distribution Examples with In-
distribution Examples and Gram Matrices",
ARXIV.ORG, CORNELL UNIVERSITY LIBRARY,
201 OLIN LIBRARY CORNELL UNIVERSITY
ITHACA, NY 14853, 28 December 2019
(2019-12-28), XP081575090

## Description

### Field

The present disclosure is directed towards conventional neural networks, and more specifically to evaluating trust of convolutional neural network outputs.

### Background

Convolutional neural networks (CNNs) have revolutionized image analysis, both matching and exceeding human performance. This gives the potential for any image analysis currently done by a human to be replaced by artificial intelligence. However, it can be argued that the main barrier to this Artificial Intelligence (AI) revolution is knowing when, and how much to trust outputs of CNNs. This all comes under the umbrella of 'model trust'. Existing technologies provide some insight into 'where a model is looking' and what information a model is using to make a decision, however, they give very little insight into when a model is not capable of giving a correct answer given an input. Existing methods of providing such insights are non-quantitative and rely on human interpretation. However, the whole point of using AI is defeated, if human interpretation is necessary on all images.

There may be two main reasons for a model for being unable to deal with an input. Firstly, the information may not be in the image and/or corrupted, i.e. an image is 'noisy' or 'out of focus'. This is of particular relevance to microscope image analysis. Secondly, it may be the case that the data is 'out of domain' for the model. For example, if a model has been designed to predict whether a yeast cell is alive or dead, it is unlikely to give sensible answers when using mammalian cells since this is out of the model's 'domain'. In other words, the model would be extrapolating an answer from data which is out of the domain to data which was used to train it.

Some efforts have been made to quantify whether a CNN model's output can be trustworthy. Indeed, the simplest way is to periodically check the model against known answers, but this may not pick up intermittent failures and additionally model failures may not be spotted until this check has been performed.

There has been some work done on using 'Bayesian' approaches to model outputs in the sense that multiple samples are run through 'subnetworks' within the networks and their agreement is seen as a metric of confidence. However, this information is limited and won't necessarily pick up 'out of domain' inputs.

WO 2022/108912 discloses an automated image quality control system. The system includes a first component including a first deep learning network model for estimating a quality of medical images acquired by an imaging device; and a second component for determining whether the medical images are out of a distribution of a training dataset used for training the first deep learning network model. However, said document uses a covariance matrix in creation of a distance metric between the feature maps. This is essentially just to create a meaningful measure of distance. For example, if many elements of a feature map from the training data are highly correlated then its importance is reduced through the covariance metric, as the result in these elements is less important.

WO 2022/045915 discloses processing input data by a neural network. Methods and apparatuses of some embodiments process the input data by at least one layer of the neural network and obtain thereby a feature tensor.

Hence, in view of the above, there is a need for a simple and robust method to evaluate trust of convolutional neural network outputs, and also check whether a new input is 'out of domain' for a convolutional neural network model.

### Summary

The invention is defined by the appended claims.

### Brief Description of the Drawings

The invention will be more clearly understood from the following description of an embodiment thereof, given by way of example only, with reference to the accompanying drawings, in which:-

FIG.1 illustrates a system for determining whether a new input is out of domain of the CNN, in accordance with an embodiment of the present invention;
FIG.2 is a flowchart illustrating a method of determining whether a new input is out of domain for a CNN, in accordance with an embodiment of the present invention;
FIG.3 illustrates an exemplary PCA reduced output corresponding to the training FMCMs;
FIG.4 illustrates an exemplary feature map covariance space for the first layer of the CNN;
FIG.5 illustrates exemplary training feature map covariance space, formed by plotting the top 2 PCA components;
FIG. 6 illustrates an exemplary 'out of domain' classifier on a space with two style components;

FIG. 7 demonstrates FMCM similarity to predict performance of the CNN on new input data;

FIG.8A illustrates the images in the style space for examining the impact of image blur vs the performance of a cell nuclei detector model;

FIG.8B illustrates the correlation of the blur level with model performance; and

FIG.9A illustrates an original image, and FIG. 9B illustrates the original image at a blur level 0.8.

## Detailed Description of the Drawings

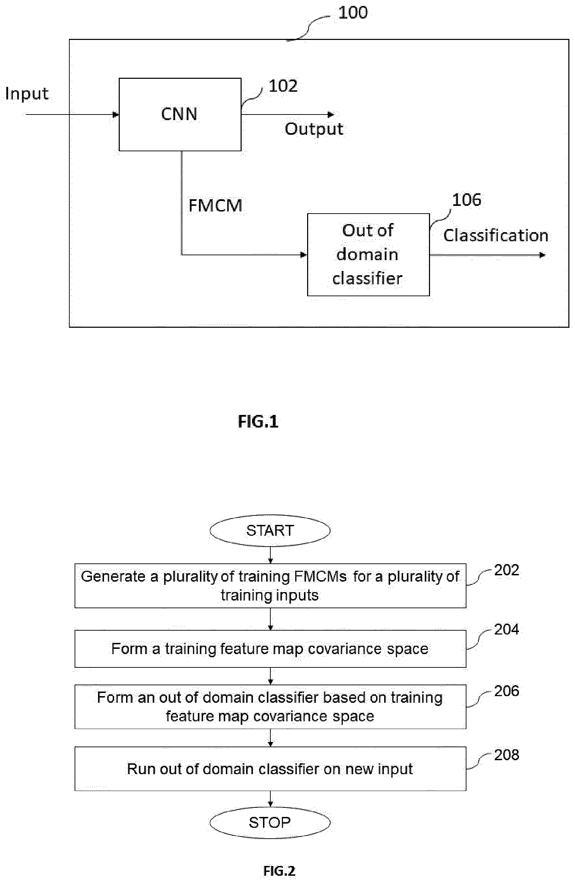

FIG.1 illustrates a system 100 that determines whether a new input is out of domain of a CNN 102, in accordance with an embodiment of the present invention. When the new input is out of domain, it implies that the CNN 102 would be extrapolating an answer from data which is out of the domain to data which was used to train the CNN 102. In the context of the present invention, the system 100 may be implemented in a server or another computer system, and implemented by way of a processor (e.g., a single or multiple processors) or other hardware described herein. These methods, functions and other processes may be embodied as machine-readable instructions stored on a computer-readable medium, which may be non-transitory, such as hardware storage devices (e.g., RAM (random access memory), ROM (read-only memory), EPROM (erasable, programmable ROM), EEPROM (electrically erasable, programmable ROM), hard drives, and flash memory).

The system 100 includes the CNN 102 is configured to predict an output for each input, and generate an FMCM for each input, and an out of domain classifier 106 configured to classify a new input in or out of domain of the CNN during run time based on FMCM of the new input. In an embodiment of the present invention, the CNN 102 may be an existing CNN modified to output FMCM for each input in addition to the model's original outputs, and may be hereinafter also referred to as modified CNN 102. The CNN 102 may be interchangeably referred to as CNN model, or model.

In the context of the present invention, the input to the CNN 102 is typically an image, and the output may be a predicted image, a predicted binary output, or a predicted category. Also, the CNN 102 may be trained using a plurality of training inputs, also referred to as training images or training data points. The input to the CNN 102 may also be referred to as input data, data, data point, or input image.

FIG.2 is a flowchart illustrating a method of determining whether a new input is out of domain for a CNN, in accordance with an embodiment of the present invention.

At step 202, a plurality of training FMCMs are generated by the CNN 102 for a plurality of training inputs. For each training input, the CNN 102 calculates an FMCM for a given CNN layer based on covariance among a plurality of feature maps of said layer.

A feature map (FM) is an output from each convolution kernel operation applied to the input from at a specific layer of the CNN 102. Typically, a plurality of feature maps is calculated per layer (30+) given the input from the previous layer.

$$FM_1 = \Omega(kernel_1 * Output\_layer_{-1} + \mathbf{B}_1)$$

$$FM_2 = \Omega(kernel_2 * Output\_layer_{-1} + \mathbf{B}_2)$$

$$FM_3 = \Omega(kernel_3 * Output\_layer_{-1} + \mathbf{B}_3)$$

$\Omega$ represents an activation function such as RELU or Sigmoid, well known to those in the art.

B is scalar (bias)

* Represents a convolution operation

The calculation of feature maps is an intermediate calculation within any convolutional CNN model's architecture and must occur for a model prediction to be made. i.e. this happens anyway within a model's architecture, and does not require the CNN 102 to perform any extra calculation.

In an embodiment of the present invention, the CNN 102 computes the FMCM for a given CNN layer for a training input by calculating a gram matrix for the features maps at that layer, such that a gram matrix element (1,3) is the covariance between feature maps 1 and 3. More explicitly, the FMCM for a training input is the following calculation given a (width) x (height) x (feature map number) dimensional tensor:

$$\mathbf{G}_{cd} = \sum_{i} \sum_{j} \mathbf{F}_{ijc} \mathbf{F}_{ijd}$$

Here G is the FMCM and F is the (width)x(height)x(feature map) tensor output from a model layer

It is clear to those skilled in the art that the above function can be incorporated directly into the CNN 102 allowing simultaneous outputs of the model prediction (e.g. a category or another image) and the FMCM for that input. Thus, for each datapoint (e.g. an image) used to train the CNN 102, the CNN 102 outputs corresponding training FMCM.

It is to be noted that the feature maps are spatially invariant and are robust to translations in the image, giving compact representations of the input data. Further, FMCMs are of much lower dimension than the CNN's whole latent space, e.g. if there are 60 feature maps in a CNN layer, an FMCM would only be 60x60 which is much lower dimension than the feature maps themselves. Thus, the training FMCMs generated based on the feature maps of the training inputs, act as a compact, model centric, representation of the training data that has been used for training the CNN 102.

At step 204, a training feature map covariance space is formed based on the plurality of training FMCMs. In an embodiment of the present invention, each training FMCM is linearized into a vector to represent a point in N dimensional space which can be seen as the model specific 'style space', S. Such style space is hereinafter interchangeably also referred to as the training feature map covariance space, where a FMCM vector form a style space vector.

e.g. Training datapoint $\rightarrow$ CNN $\rightarrow$ model_output S

Where S is $\in \Re^d$ with d dependent only on the number of feature maps. The set of S vectors forms the 'style similarity space' or the training feature map covariance space. The distribution of the training data within this space can easily be bounded by many techniques well known to those skilled in the art such as 1 Class SVM, or fitting a parametric distribution. The covariance matrices elements are typically correlated and thus the dimensionality of the training FMCMs can be reduced even further by standard techniques such as Principal component analysis (PCA).

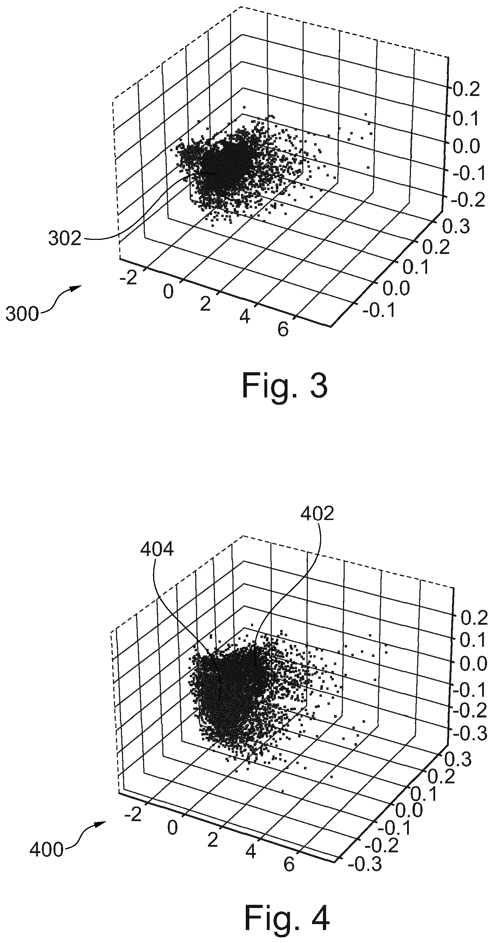

FIG.3 illustrates an exemplary PCA reduced output corresponding to the training FMCMs of an exemplary single cell CNN classifier built to determine whether a mammalian cell was alive or dead. The input to the CNN 102 is an image of a single cell and the output is binary 'dead' or 'alive'. Another example is using an image-to-image CNN 102 built to mark-up cellular nuclei within an image. The three axes of the space 300 represent the top 3 PCA components, and the sub-space 302 represent those enclosed by the CNN 102. The yellow points represent those enclosed by the one class SVM. This is just an example classifier built to encapsulate the model training data.

FIG.4 illustrates an exemplary feature map covariance space 400 for the first layer of the CNN 102. The dimensionality has been reduced via PCA for viewing purposes. The top 3 components of the PCA are shown. The feature map covariance space 400 represents the training data 402 and new data to be predicted 404. This is an illustration of how 'out of domain' new data (in blue) can be easily separated from the model's training data in the 'style space'.

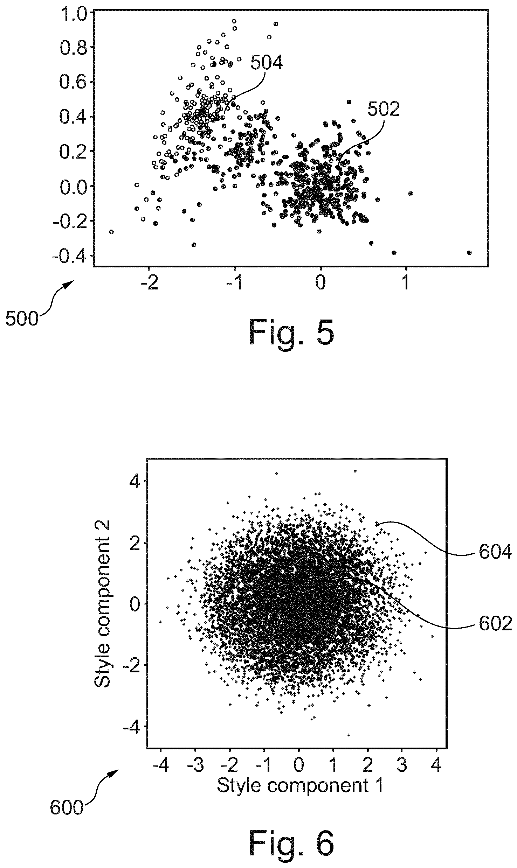

FIG.5 illustrates exemplary training feature map covariance space 502, formed by plotting the top 2 PCA components of the FMCM vectors. The training data is plotted on a scale of purple to blue (highest accuracy to lowest accuracy) and FMCMs 504 of a new dataset is plotted yellow to red (highest accuracy to lowest accuracy). It is clear that the accuracy of predictions drops as new data points move away from the training data.

It is observed that by looking at training data distributions in the training feature map covariance space, it can be checked whether new input/data is of sufficiently similar 'style' to the training data. It has also been observed empirically that new input being in a different style space is out of domain for the CNN 102 and thus a CNN's output from this new input cannot be trusted.

Referring back to FIG.2, at step 206, the out of domain classifier 106 is built for the training feature map covariance space, for classifying an FMCM in or out of the training feature map covariance space. The out of domain classifiers are well known to those skilled in the art. The out of domain classifier 106 is built on the training FMCMs, and is used to predict whether new FMCMs are in or out of domain with respect to training FMCMs.

FIG. 6 illustrates an exemplary 'out of domain' classifier on a space with two style components, i.e. the style space vector is of two dimension. The style space vector is an FMCM vector. The first space 602 corresponds to in domain data, and the second space 604 represents out of domain data, with respect to the training data.

In this example, the 'out of domain' classifier is

$$\text{IF } (\text{Style component\_1}^2 + \text{Style component\_2}^2) > 7$$

RETURN 1

ELSE

RETURN 0

Here 1 and 0 correspond to 'out of domain' and 'in domain' respectively.

At step 208, the out of domain classifier 106 runs on new input, to classify the new input in or out of the domain of the CNN, based on whether corresponding new FMCM is in or out of the training feature map covariance space. The out of domain classifier 106 receives the new FMCM from the CNN 102 for the new input, and classifies the new FMCM in or out of the training feature map covariance space. When the new FMCM is out of the training feature map covariance space, it can be ascertained that the new input is out of domain of the CNN 102. When the new FMCM is within the training feature map covariance space, it can be ascertained that the new input is in domain of the CNN 102. The out of domain classifier 106 is further configured to flag the new input and raise a warning to the user, when the new input is found to be out of domain. When the new input data points are classified as out of the training distribution in style space, they can be considered out of CNN model's domain, and thus the output of the CNN model 102 cannot be trusted.

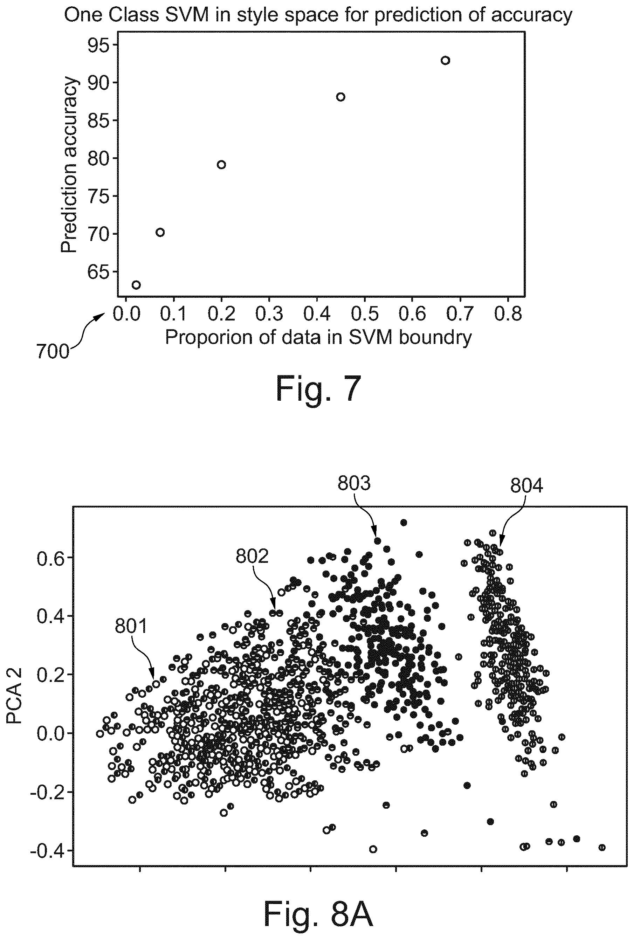

FIG. 7 demonstrates FMCM similarity to predict performance 700 of the CNN 102 on new input data. For each new dataset, proportion of data outside of the training data in the training feature map covariance space is calculated and compared against the CNN's accuracy on corresponding dataset. It can be seen clearly, that there is a strong relationship between model accuracy and similarity to training data in the training feature map covariance space.

In an embodiment of the present invention, the CNN 102 is trained on microscopic images, and it is shown if the images have a different style from the training data, they are unlikely to be successful within that network.

FIG.8A illustrates the images in the style space for examining the impact of image blur vs the performance of a cell nuclei detector model. The images are deliberately put out of focus using gaussian blur to flag the dissimilar images using the style similarity. The blue points represent the CNN's 102 training data. The orange 801 is a blur sigma level of 0.3. The green 802 is a blur sigma level of 0.4. The red 803 is a blur sigma level of 0.5. The purple 804 is a blur sigma level of 0.8.

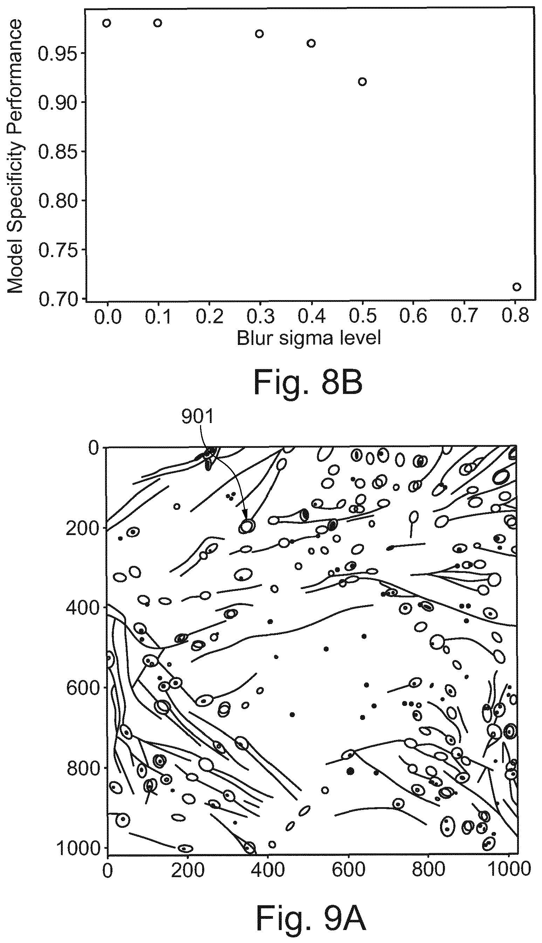

FIG.8B illustrates how the blur level correlates with model performance. It is clear that as new data moves away from training data in the style space, the performance of the CNN 102 drops.

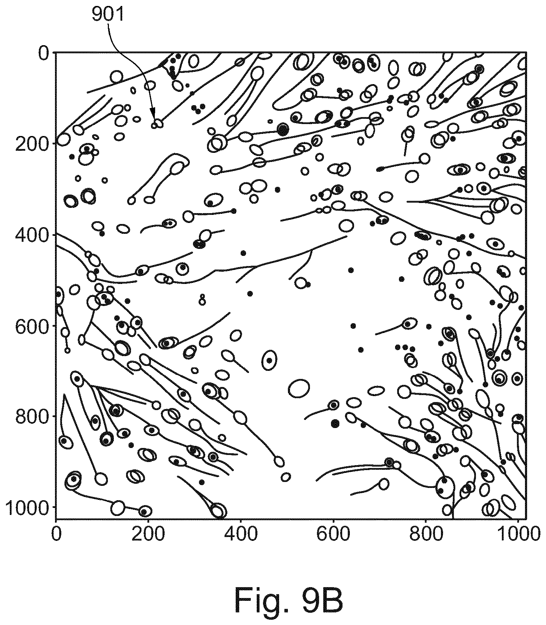

FIGs.9A illustrates an original image, and FIG. 9B illustrates the original image at a blur level 0.8. The purple 901 represents the model predictions of nuclei and the pink is the actual nuclei. It can be seen that at blur level 0.8 the CNN 102 specificity drops (false positives). While mostly microscopic images are being given as examples here, this technique is applicable to any convolutional neural network. For example, if training data was always taken on clear days, it is likely the model would struggle with a shift in style, such as that from rain.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. a memory stick or hard disk. The carrier may be an electrical or optical signal which may be transmitted via an electrical or an optical cable or by radio or other means.

**Claims**

1. A computer-implemented method of determining whether a new input is out of domain of a Convolutional Neural Network, CNN, (102), comprising:
   enabling the CNN (102) to:

   generate a FMCM for each input in addition to predicting an output for each input;

   generate a FMCM for each input for each CNN layer, and linearize each FMCM of a given CNN layer into a vector to represent a point in a feature map covariance space of said CNN layer; and
   compute the FMCM for the given CNN layer for a given input, based on covariance among a plurality of feature maps of said layer for the given input;

   building an out of domain classifier for the CNN (102) based on a training feature map covariance space of a plurality of training FMCMs, and wherein the plurality of training FMCMs is generated by the CNN (102) for a plurality of training inputs that has been used to train the CNN (102) for predicting an output for each input; and enabling the out of domain classifier to run on the new input to classify the new input in or out of domain of the CNN (102), based on whether corresponding new FMCM is in or out of the training feature map covariance space, wherein the input of the CNN is an image of a single cell, and

wherein the predicting comprises determining whether a mammalian cell was alive or dead, or building an image to mark-up cellular nuclei.

2. The method as claimed in claim 1 further comprising enabling the CNN (102) to compute the FMCM for the given CNN layer for the given input by calculating a gram matrix between each pair of feature maps of corresponding plurality of feature maps.

3. The method as claimed in claim 2, further comprising enabling the out of domain classifier to flag the new input, when the new input is determined as out of domain of the CNN (102).

4. The method as claimed in claim 2, further comprising enabling the CNN (102) to reduce the dimensionality of each FMCM based on principle component analysis, PCA, for forming the training feature map covariance space.

**Patentansprüche**

1. Computerimplementiertes Verfahren zum Bestimmen, ob eine neue Eingabe außerhalb der Domäne eines neuronalen Faltungsnetzwerks, CNN, (102) liegt, umfassend:
das CNN (102) dazu zu befähigen:

für jede Eingabe zusätzlich zur Vorhersage einer Ausgabe für jede Eingabe eine FMCM zu erzeugen;
für jede Eingabe für jede CNN-Schicht eine FMCM zu erzeugen und jede FMCM einer gegebenen CNN-Schicht zu einem Vektor zu linearisieren, um einen Punkt in einem Merkmalskarten-Kovarianzraum der genannten CNN-Schicht darzustellen; und
die FMCM für die gegebene CNN-Schicht für eine gegebene Eingabe basierend auf einer Kovarianz zwischen einer Vielzahl von Merkmalskarten der genannten Schicht für die gegebene Eingabe zu berechnen;
einen Außerhalb-der-Domäne-Klassifikator für das CNN (102) basierend auf einem Trainings-Merkmalskarten-Kovarianzraum einer Vielzahl von Trainings-FMCMs zu erstellen, und wobei die Vielzahl von Trainings-FMCMs durch das CNN (102) für eine Vielzahl von Trainingseingaben erzeugt wird, die zum Trainieren des CNN (102) zum Vorhersagen einer Ausgabe für jede Eingabe verwendet worden sind; und
den Außerhalb-der-Domäne-Klassifikator dazu zu befähigen, auf die neue Eingabe angewendet zu werden, um die neue Eingabe als innerhalb oder außerhalb der Domäne des CNN (102) zu klassifizieren, basierend darauf, ob eine entsprechende neue FMCM innerhalb oder außerhalb des Trainings-Merkmalskarten-Kovarianzraums liegt,
wobei die Eingabe des CNN ein Bild einer einzelnen Zelle ist, und
wobei das Vorhersagen das Bestimmen, ob eine Säugetierzelle lebendig oder tot war, oder das Erstellen eines Bildes zum Markieren von Zellkernen umfasst.

2. Verfahren nach Anspruch 1, das weiter umfasst, das CNN (102) dazu zu befähigen, die FMCM für die gegebene CNN-Schicht für die gegebene Eingabe durch Berechnen einer Gram-Matrix zwischen jedem Paar von Merkmalskarten der entsprechenden Vielzahl von Merkmalskarten zu berechnen.

3. Verfahren nach Anspruch 2, das weiter umfasst, den Außerhalb-der-Domäne-Klassifikator dazu zu befähigen, die neue Eingabe zu kennzeichnen, wenn bestimmt wird, dass die neue Eingabe außerhalb der Domäne des CNN (102) ist.

4. Verfahren nach Anspruch 2, das weiter umfasst, das CNN (102) dazu zu befähigen, die Dimensionalität jeder FMCM basierend auf einer Hauptkomponentenanalyse, PCA, zum Bilden des Trainings-Merkmalskarten-Kovarianzraums zu verringern.

**Revendications**

1.  Procédé mis en œuvre par ordinateur de détermination du fait qu'une nouvelle entrée est hors domaine d'un réseau neuronal convolutif, CNN, (102), comprenant :
    le fait de permettre au CNN (102) de :

    générer un FMCM pour chaque entrée en plus de la prédiction d'une sortie pour chaque entrée ;

    générer un FMCM pour chaque entrée pour chaque couche de CNN et linéariser chaque FMCM d'une couche de CNN donnée dans un vecteur pour représenter un point dans un espace de covariance de cartes de caractéristiques de ladite couche de CNN ; et
    calculer le FMCM pour la couche de CNN donnée pour une entrée donnée, sur la base d'une covariance parmi une pluralité de cartes de caractéristiques de ladite couche pour l'entrée donnée ;

    créer un classificateur hors domaine pour le CNN (102) sur la base d'un espace de covariance de cartes de caractéristiques d'entraînement d'une pluralité de FMCM d'entraînement et dans lequel la pluralité de FMCM d'entraînement sont générés par le CNN (102) pour une pluralité d'entrées d'entraînement qui ont été utilisées pour entraîner le CNN (102) à prédire une sortie pour chaque entrée ; et
    permettre au classificateur hors domaine d'être exécuté sur la nouvelle entrée pour classer la nouvelle entrée dans ou hors du domaine du CNN (102), sur la base du fait qu'un nouveau FMCM correspondant est dans ou hors de l'espace de covariance de cartes de caractéristiques d'entraînement,
    dans lequel l'entrée du CNN est une image d'une cellule unique, et
    dans lequel la prédiction comprend le fait de déterminer si une cellule de mammifère était vivante ou morte ou la création d'une image pour marquer des noyaux cellulaires.

2.  Procédé selon la revendication 1 comprenant en outre le fait de permettre au CNN (102) de calculer le FMCM pour la couche de CNN donnée pour l'entrée donnée en calculant une matrice de Gram entre chaque paire de cartes de caractéristiques d'une pluralité correspondante de cartes de caractéristiques.

3.  Procédé selon la revendication 2, comprenant en outre le fait de permettre au classificateur hors domaine de marquer la nouvelle entrée lorsque la nouvelle entrée est déterminée en tant que hors domaine du CNN (102).

4.  Procédé selon la revendication 2, comprenant en outre le fait de permettre au CNN (102) de réduire la dimensionnalité de chaque FMCM sur la base d'une analyse des composants principaux, PCA, pour former l'espace de covariance de cartes de caractéristiques d'entraînement.

100

Input → CNN → 102 Output

FMCM → Out of domain classifier → 106 Classification

**FIG.1**

START

Generate a plurality of training FMCMs for a plurality of training inputs — 202

Form a training feature map covariance space — 204

Form an out of domain classifier based on training feature map covariance space — 206

Run out of domain classifier on new input — 208

STOP

**FIG.2**

Fig. 3

Fig. 4

Fig. 5

Fig. 6

One Class SVM in style space for prediction of accuracy

Fig. 7

Fig. 8A

Fig. 8B

Fig. 9A

Fig. 9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022108912 A
- WO 2022045915 A